# EUROPEAN PATENT APPLICATION

(11) **EP 4 253 860 A1**
(43) Date of publication of application: **04.10.2023**
(21) Application number: 22166330.5
(22) Date of filing: 01.04.2022
(51) Int. Cl.: F24H 1/18, F24H 4/04, F24H 9/02, B29C 44/12

(54) **CAP ELEMENT WITH ANTI-DEFORMATION WALL STRUCTURES**

(71) Applicant: BDR Thermea Group B.V., 7332 BD Apeldoorn (NL)
(72) Inventor: KIEFFER, Damien, 7332 BD Apeldoorn (NL); CHASSAGNARD, Benjamin, 7332 BD Apeldoorn (NL); CROUZET, François, 7332 BD Apeldoorn (NL); ANTOINE, Florian, 7332 BD Apeldoorn (NL)
(74) Representative: Dennemeyer & Associates S.A.

(57) **Abstract**

Cap element (1) for a heating device (2), the heating device (2) including a water tank (3) located in a casing (4), wherein the cap element (1) is placeable on or in the casing (4) and closes said casing (4), in particular at an upper portion (12) of the tank (3), the cap element (1) comprising a first surface (10) facing at least an internal side of the casing (4) and abutting against at least a portion of said side of the casing (4) when the cap element (1) is placed on or in the casing (4) and a second surface (11) facing the upper portion (12) of the water tank (3) when the cap element (1) is placed on or in the casing (4), and
at least a wall structure (5) protruding from the remaining cap element (1) and comprising an internal surface (18) that faces an internal central region of the water tank (3), wherein at least a part of the cap element, in particular the complete cap element is made of expanded foam material, in particular expanded polystyrene, expanded polyethylene, or expanded polypropylene.

## Description

The invention relates to a cap element for a heating device and to a heating device system comprising said cap element. Also, the invention relates to a use of said cap element with a heating device system, in particular a heat pump water heater.

A heating device like a heat pump is a device able to warm a closed space of a building or to warm domestic hot water by transferring thermal energy from a source to another. An air-source heat pump water heater is a device using the heat pump technology to use energy from air to heat the domestic water contained in a tank.

A hot water tank for the production of hot water for heating or domestic hot water is composed of two main elements: a tank and a thermal insulation. The thermal insulation is usually achieved by one of two means: the installation of parts around the tank (adhesive foam parts, adhesive insulation etc.) or the injection of insulating foam into an outer casing. Insulating foam injection is achieved by injecting chemical components that react together via a chemical reaction. This chemical reaction causes the solid produced to expand to such an extent that the volume of foam obtained is much greater than the volume of the components injected separately.

The injection process is a complex one and many factors create variability in the volume required and the volume injected, i.e., tank geometry tolerance, casing geometry tolerance, ambient air temperature, temperature of the chemical components of the insulation, concentration of the components, nature of the components, precision of the injection machine, temperature of the tank, surface condition of the tubes, etc.

Among these elements, it is noted that the mechanical stress created by the expanded foam is greatest at the highest point of the container, as the foam expands into an increasingly limited volume.

Usually, when water heaters are thermally insulated by injecting foam insulation between the casing and the tank, the solution is generally to realize a tank in stainless steel or steel combined with enamel, using an insulator such as Polyurethane foam and providing a casing that comprises a bottom portion made of plastic or steel cap, side portions in the form of a cylinder or parallelepiped or other geometry made of plastic or steel plate, and a top portion made of plastic or steel cap.

The plastic or steel top portion is designed to seal against the side portion of the casing. It is also designed not to deform due to sufficient dimensioning. The top portion is designed such not to deform due to sufficient dimensioning. However, the shape of the top portion is limited due its manufacturing process.

It is therefore desirable to provide a cap element which form can be adapted to the casing and need that ensures the tightness of the container.

The object is solved by a cap element for a heating device, the heating device including a water tank located in a casing, wherein the cap element is placeable on or in the casing and closes said casing, in particular at a portion of the tank, the cap element comprising: a first surface facing at least an internal side of the casing and abutting against at least a portion of said side of the casing when the cap element is placed on or in the casing and a second surface facing the portion of the water tank when the cap element is placed on or in the casing; and
at least a wall structure protruding from the remaining cap element and comprising an internal surface that faces an internal central region of the water tank, wherein at least a part of the cap element, in particular the complete cap element is made of expanded foam material, in particular expanded polystyrene, expanded polyethylene, or expanded polypropylene.

Such a cap element has the advantage that its form can be adapted to the specific need. Additionally, the cap element ensures the tightness of the container when it is placed on or in the container. It is noted that, when the cap element is placed in the casing, a wall structure of the cap element is located in a limited volume of the casing between the, in particular upper, portion of the water tank and the cap element, where the greatest mechanical stress is present due to the pressure of the insulating foam. The wall structure enables a pressure compensation so that the lateral pressures from the expansion of the foam insulation to the wall structure help to maintain the form of the cap element. In particular, the wall structure provides support for the expansion of the foam, which counteracts the support generated on the first surface, and prevents the cap element from being deformed to any great extent. This ensures a tight seal and constrains deformation. In particular, it avoids leakage of insulation foam between the casing and the cap element. Also, there is a lack of sufficient deformation to create sufficient clearance between the casing and the cap element to generate leakage. The size of the clearance sufficient to create a leak depends on its geometry and the parameters of the injection foam and the associated process. The order of scale to create leakage is a few tenths of a millimeter.

In particular, thanks to the wall structure, a radial stress from the inside of the product towards the outside is obtained at the cap element by the expansion of the insulating foam. This force opposes the radial stress in the opposite direction (from the outside to the inside) obtained on the cap element by the expansion of the insulating foam on the first surface. This balance of radial stresses avoids contraction of the top piece, which would cause holes between the heater casing and the top piece, and thus leakage of the foam insulation. Indeed, the first surface preferably can have a "bowl shape" to place the heat pump on the cap element and so its consequences on radial stress also. The wall structure serves to compensate the contraction and to "stuck" the part without deformation. In order to do so, the wall structure has to be below the first surface (as explained further in the description) to stuck the part before insulation foam expansion reach first surface (insulation foam expand from the bottom to the top of the product).This prevents leakage of the insulating material. In the event of insulating material leakage, the product is unusable or would require a repair action. In addition, the cap layer can stay in position and does not deform due to mechanical stress. This ensures that material (of the wall structure and/or of the cap element as well as of the insulating material) is present all around the product, without any gaps. A lack of material leads to performance losses and aesthetic degradation reducing the perceived quality of the product or removes the mechanical integrity of the product.

The portion of the tank can be an upper portion or a lower portion. Whether the portion is an upper portion or a lower portion can depend on the positioning of the product during e.g. a foaming injection process. For example, with the expression "the cap element can close the casing "at an upper portion of the tank" is intended that the top of the tank, at the time of the injection of insulating foam.

In one example, the wall structure is configured to cause the cap element to seal against the sides of the casing upon exerting a mechanical pressure on the wall structure. As mentioned above, a lateral pressure of the wall structure can determine increase the sealing of the cap element abutting against the sides of the casing. In particular, the mechanical pressure can be caused by the generation of an insulating material produced in a space between the water tank and the casing. In addition, the mechanical pressure can be directly or indirectly exerted on said wall structure.

In another example, the wall structure can be integrated in the second surface of the cap element. Alternatively or additionally, the wall structure can be arranged in a cavity of the cap element. Alternatively or additionally, the wall structure can be attachable to the second surface of the cap element. These different configurations can advantageously improve the manufacturing steps based on the necessity. It is noted that the second surface can be part of a base portion of the cap element, i.e., the lower portion of the cap element, that faces internal volume of the casing and therefore the water tank when the cap element is inserted in the casing or placed on the casing. It is furthermore noted that wall structures can be of any materials as long as they are strongly attached to the deformable cap element. In order to achieve this, and in order to have the most economical solution, it is therefore in the interest of the wall structure to be a part of the upper part, and therefore of the same material (injected together as a single part). Thus, the cap element can be easily made if the wall structure is also made of expanded foam material, in particular expanded polystyrene, expanded polyethylene, or expanded polypropylene, like the remaining part of the cap element.

In another example, the wall structure extends parallel to the sides of the casing. In other words, the wall structure protrudes from the second surface as an elongated structure in the direction perpendicular to the second surface and therefore parallel to the casing sides. In particular, the orientation of the wall structure is perpendicular to the second surface with a deviation of about ±15°. The fact that the wall structure is parallel to the sides of the casing additionally increases the effect of the lateral pressure on the wall structure to improve the sealing.

In order to have a sufficient support surface for the insulating foam, the surface of the wall structure must have a sufficiently large surface area. In an example, the wall structure has a surface area of at least 2,500 mm², preferably at least 10,000 mm² / 20,000 mm².

To ensure the mechanical strength of the wall structure, this structure needs to have a minimum thickness. According to an example, the wall structure has a thickness value of at least 15 mm, in particular of 20 mm. It is noted that using injected plastic (and not expanded plastic or foam), it is impossible to obtain such thickness values. Usually a maximum thickness of 4 mm is obtained. As a matter of fact, it is also not necessary to realize thick structure since injected plastic is more rigid than expanded plastic.

In another example, the wall structure is compressible in response to the mechanical pressure. This additionally increases the flexibility of the wall structure in response to a mechanical pressure.

In one example, the cap element part comprising the first surface of the cap element is made of, or is at least partially coated with, the expanded foam material. As mentioned above, the first structure represents a surface of the cap element facing the lateral sides of the casing. In particular, when the cap element is inserted in the casing or is placed on the casing, the first structure can abut against the sides of the casing, thereby defining a sealing between the cap element and the casing. The possibility of making the first surface (entirely or partially) of deformable material definitely increases the sealing effect in response to the mechanical pressure exerted on the wall structure.

In a further example, the cap element comprises a third surface, parallel to the second surface, said third surface being a supporting surface for at least one mechanical and/or electronic device. In other words, the third surface can be the top surface of the cap element, whereas the second surface can be a bottom surface or base surface of the cap element. As a matter of fact, in a heating device such as water heater, various components of the heat pump are usually attached to this top surface. Since the present cap element is provided with an anti-deforming wall structure, the dimensions between the different forms and functions (hole, screwing point, support or centering areas etc.) are guaranteed, which ensures the assembly and fixing of components and therefore also the stability of the system.

In particular, the wall structure can be made of expanded foam material, in particular expanded polystyrene, expanded polyethylene, or expanded polypropylene. Advantageously, the cap element can be entirely made of expanded foam material, in particular expanded polystyrene, expanded polyethylene, or expanded polypropylene. This material is considered extremely suitable for determining an anti-deformation of the cap element compared to the dimensions of the casing.

The cap element can have a Young Modulus between 0 MPa and 100MPa, in particular between 1 MPa and 100 MPa, in particular 5 MPa to 20 MPa. The values in MPa refer to the Young Modulus determined at 3% compression in dependence of g/l (gram per liter). The Young Modulus is determined according to ISO 844.

Thus, the wall structure and/or the remaining part of the cap element can have the aforementioned Young Modulus.

As already mentioned, the wall structure protrudes from the first surface parallel to the first surface of the cap element. In particular, the wall structure is configured to have an internal surface facing the inside of the product. This internal surface can be parallel or almost parallel to the first surface.

In addition, the wall structure can be a one-piece structure or can be formed by a plurality of separated structures. In particular, the cap element can have a circular cross-section and the wall structure can have a curved profile. In this way, the lateral pressure can be uniformly distributed on the wall structure and therefore on the cap element.

Advantageously, the wall structure is arranged in a geodetically lower part of cap element with respect to the cap element having the first surface. In other words, the wall structure represents a re-entrant step of the cap element. In particular, the first surface defines an first external perimeter of the cap element (for example a circumference) and the wall structure defines a second external perimeter of the cap element (for example a circumference), wherein the first external perimeter is wider that the second external perimeter.

In one example, the wall structure is formed by a plurality of separated structures, in particular at least three separated structures, arranged along a circumferential perimeter, wherein in particular the wall structure is formed by three separated structures arranged at around 120° apart from each other or by four separated structures arranged at around 90° apart from each other. Alternatively, one or more elements of the wall structure can be used to provide at least three support points at a distance of at least 90° from each other in order to ensure that the force is distributed over the periphery of the product. Without this distribution, these elements of the wall structure could have a harmful effect and accentuate the phenomenon of the top cover shifting to one side, generating a large opening on one side with the water heater cover.

In one additional example, the wall structure comprises at least an inclined surface forming an angle α with a vertical central axis of the cap element, wherein in particular α is lower than 45° and more particularly α is lower than 30°. In this way, the mechanical lateral pressure can advantageously act on the inclined surface of the wall structure in the direction of the sides of the casing. In particular; this inclined surface can serve to have stiffening ribs so that the protrusions of the wall structure would not break with the expansion support of the foam.

In another aspect of the invention, a heating device system is provided, in particular a heat pump water heater. The heating device system comprising a casing, a water tank located in the casing, and an inventive cap element, the cap element being placeable on or in the casing and closing said casing at an upper portion of the tank, wherein the cap element comprises a first surface facing at least a side of the casing and abutting against at least a portion of said side of the casing when the cap element is placed on or in the casing and a second surface facing the upper portion of the water tank when the cap element is placed on or in the casing; and
at least a wall structure protruding from the remaining cap element and comprising an internal surface that faces an internal central region of the water tank, wherein at least a part of the cap element, in particular the complete cap element is made of expanded foam material, in particular expanded polystyrene, expanded polyethylene, or expanded polypropylene.

In one example, the heating device further comprises an insulating material arranged in a space between the water tank and the casing, the insulating material causing a direct or indirect mechanical pressure (or stress) on the wall structure of the cap element.

In one example, the cap element is a support for a heat pump.

In a further aspect of the invention, a use of the inventive cap element is provided. The inventive cap element is used with a heating device system , in particular a heat pump water heater.

In the figures, the subject-matter of the invention is schematically shown, wherein identical or similarly acting elements are usually provided with the same reference signs.
- Figures 1A-B: show a schematic representation of the use of the cap element according to an example.
- Figures 1C-D: show a schematic representation of the use of the cap element according to another example.
- Figures 2A-C: show bottom views of a schematic representation of the cap element according to an example.
- Figures 3A-B: show a lateral and a bottom view of a schematic representation of the cap element according to an example.
- Figures 4: shows a schematic representation of the heating device system according to an example.

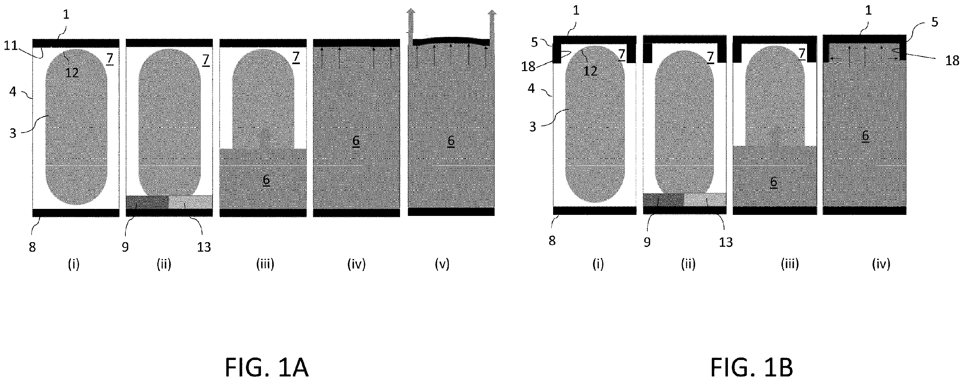

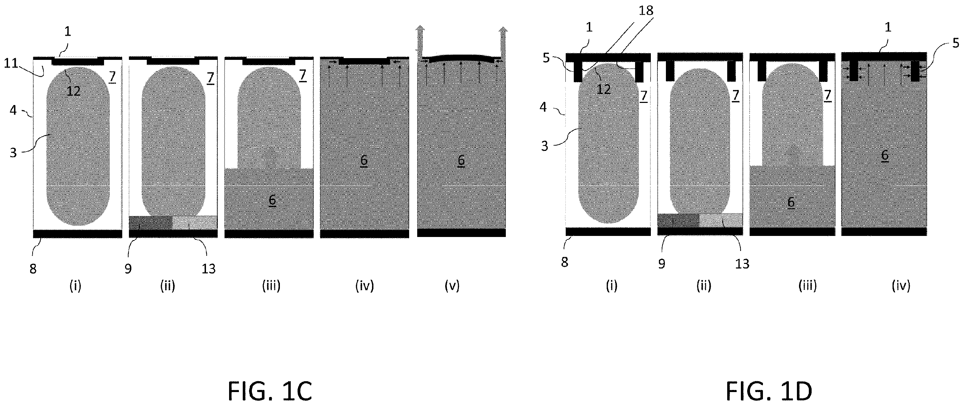

Figures 1-D illustrate the employment of a cap element 1 that at least partly is made of expanded foam material, in particular expanded polystyrene, expanded polyethylene, or expanded polypropylene. Fig. 1A and Fig. 1C show a cap element 5 that does not have a wall structure and Fig. 1B and 1D show a cap element 1 having the wall structure 5 that protrudes from the remaining cap element 1 For the sake of clarity, same elements are denoted with the same reference numeral. In particular, the only difference between the two systems illustrated in the figures is the presence of a wall structure 5 extending from the second surface 11 (i.e., the bottom surface) of the cap element 1. The difference between the configurations of figures 1A-B and 1C-D is only in the form of the cap element 1. As a matter of fact, figures 1C-D show a configuration wherein the standard cap element 1 is lowered in the central region (Fig 1C) and the cap element 1 according to the present disclosure has wall structures 5 not touching the sides of the casing 4 (Fig. 1D).

In all cases, a water tank 3 is located inside a casing 4 so that a space 7 is formed between the casing 4and the tank 3. The casing 4 is provided with a base element 8 and a cap element 1 (Fig. 1A-D (i)). A first chemical component 9 and a second chemical component 13 are injected into the casing 4 (Fig. 1A-D (ii)). Upon reacting together, the first chemical component 9 and a second chemical component 13 produce an insulating material 6 such as foam that gradually fills the casing from the bottom to the top (Fig. 1A-D (iii)). This chemical reaction causes the foam produced to expand to such an extent that the volume of foam obtained is much greater than the volume of the components injected separately. Therefore, when the insulating material 6 completely fills the space 7 inside the casing 4, a mechanical pressure is exerted on the cap element 1. The insulating material 6 can be a thermal insulator, preferably polyurethane. If standard a cap element 1 is used, the mechanical pressure or stress exerted on the cap element 1 from inside the casing 4 produces a deformation of the cap element 1. This weakens the sealing of the cap element 1 and insulating material 6 can exit the casing 1 through leakage regions (Fig. 1A and C (iv-v)).

On the other hand, if the cap element 1 is provided with a wall structure 5, the mechanical pressure is also laterally distributed on said wall structure 5 and the cap element 1 is not deformed. Accordingly, the sealing of the cap element 1 is guaranteed. It is noted that the form of the cap element 1 can be maintained due to the fact that the wall structure 5 comprising internal surfaces 18 compensating the lateral mechanical stress of the insulating material 6 pressing from inside the casing 4.

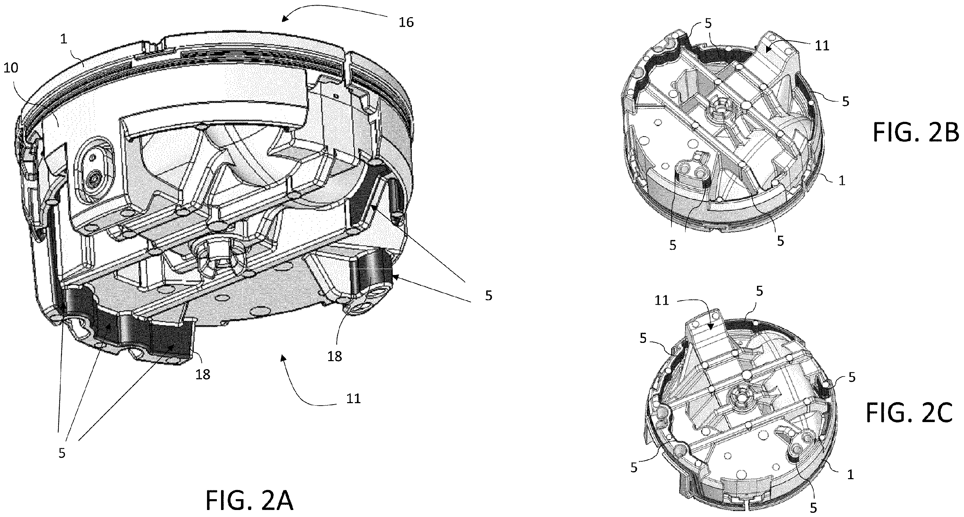

Figures 2A, 2B and 2C illustrate a perspective bottom view of the cap element 1. As shown in the figures, the wall structure 5 comprises a plurality of separated structures extending from the second surface 11 of the cap element 1. The second surface 11 represents the bottom surface of the cap element 1 and is parallel to the third surface 16 representing the top surface of the cap element 1. A first surface 10, or lateral surface of the cap element 1 defines the lateral edges of the cap element 1 that abuts the side of the casing when the cap element 1 is inserted into the casing 4. The wall structure 5 can be shaped differently based on the position on the second surface 11 of the cap element 1. However, the wall structure 5 is basically arranged uniformly around a perimeter of the first surface 11. As shown in the figures, the cap element 1 has a circular cross section and the wall structure 5, or rather the separated elements of the wall structure 5, is distributed uniformly around the circular perimeter of the first surface 11.

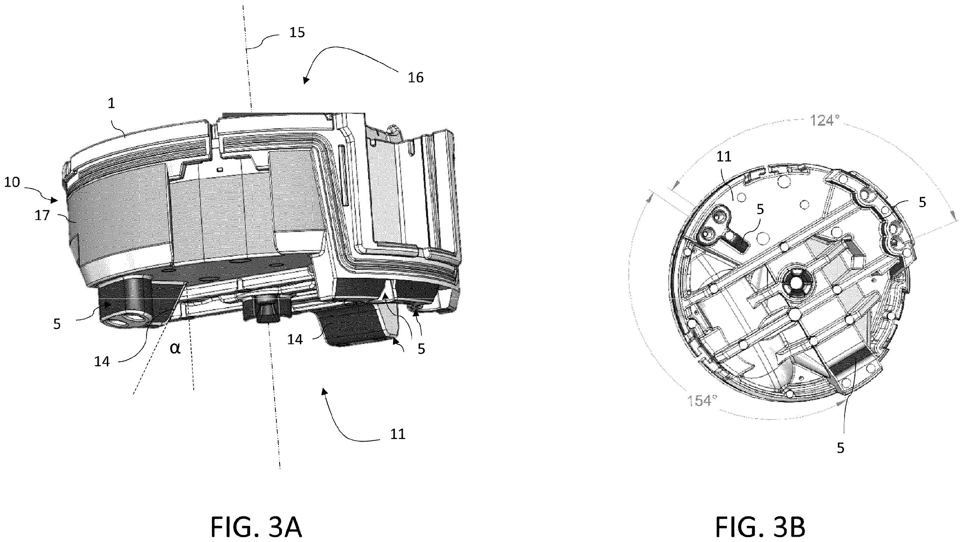

Figures 3A and 3B illustrate a perspective side and bottom view of the cap element 1 according to another configuration of the wall structure 5. As shown in figure 3A, the lowest point of these structure wall 5 has a surface exposed to the upper portion of the water tank 3, when the cap element 1 is inserted in or placed on the casing 4. It is noted that the wall structure 5 is located lower than the first surface 10. The first surface 10 can advantageously have an external layer 17 of deformable material having causing deformation from exterior to center of the casing 4.

Thus, as the insulation foam expands from the bottom to the top, it first touches the wall structure 5 in order to suck or fix the cap element 1 without major deformation from the periphery to the center. If the foam touches first only external layer 17 of the first surface 10 then it would deform the cap element 1 and would create some holes.

The wall structure 5 can comprise at least an inclined surface 14. This surface 14 forms an angle α with a vertical central axis 15 of the cap element 1. For example, α can be lower than 45° and more particularly lower than 30°. It is noted that the inclined surface 14 faces the central internal region of the casing 4 so that the foam, when expanding in the space 7 of the casing 4, generates a pressure from the central internal region of the casing 4 outwards, i.e., towards the sides of the casing 4.

Figure 3B describes the arrangement of the wall structure 5. In particular, separate elements of the wall structure 5 can be located at distinct angular positions to be sure that there are counter-stress regions on the whole periphery of the cap element 1. It is possible, for example, arranging four separate elements of the wall structure 5 at 90° each or three separate elements of the wall structure 5 at more or less 120° each. At least, the minimal request is to have at least three separate elements of the wall structure 5, wherein at least 3 points on these elements are more than 90° apart. Figure 3B illustrates an example wherein the three points are arranged at about 124°, 154° and 82° apart from each other around a circumferential perimeter.

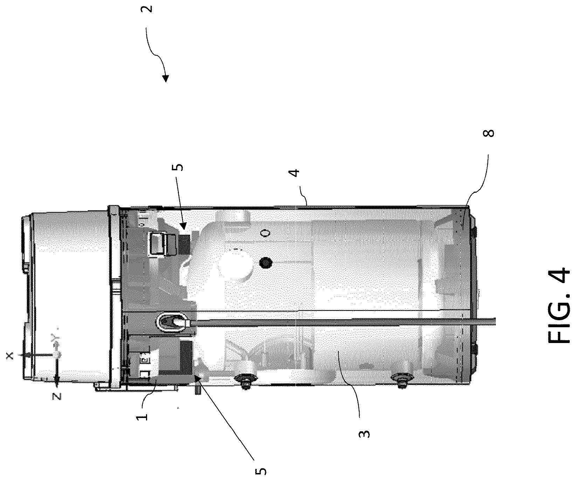

Figure 4 illustrates a heating device system 2, in particular an insulated heat pump water heater, having a heat pump (not shown in the figure) located on the top of a casing 4 and a water tank 3 located inside the casing 4 below the heat pump. In particular, the heat pump is supported by a cap element 1 of the heating device system 2. The cap element 1 serves as top closing element of the casing 4. Due to the presence of wall structure 5 made of deformable material, the cap element 1 absolve its function of sealing the casing 4 without the risk of deformation.

### Reference Signs

- 1: Cap element
- 2: Heating device
- 3: Water tank
- 4: Casing
- 5: Wall structure
- 6: Insulating material
- 7: Space
- 8: Base
- 9: First chemical component
- 10: First surface
- 11: Second surface
- 12: Upper portion of the tank
- 13: Second chemical component
- 14: Inclined surface
- 15: Vertical central axis
- 16: Third surface
- 17: External layer
- 18: Internal surface

## Claims

1. Cap element (1) for a heating device (2), the heating device (2) including a water tank (3) located in a casing (4), wherein the cap element (1) is placeable on or in the casing (4) and closes said casing (4), in particular at a portion (12) of the tank (3), the cap element (1) comprising:
a first surface (10) facing at least an internal side of the casing (4) and abutting against at least a portion of said side of the casing (4) when the cap element (1) is placed on or in the casing (4) and a second surface (11) facing the portion (12) of the water tank (3) when the cap element (1) is placed on or in the casing (4); and
at least a wall structure (5) protruding from the remaining cap element (1) and comprising an internal surface (18) that faces an internal central region of the water tank (3), wherein
at least a part of the cap element, in particular the complete cap element is made of expanded foam material, in particular expanded polystyrene, expanded polyethylene, or expanded polypropylene.

2. Cap element (1) according to claim 1, **characterized in that**
the wall structure (5) is configured to cause the cap element (1) to seal against the sides of said casing (4) upon exerting a mechanical pressure on said wall structure (5), wherein:
a. the mechanical pressure is caused by the generation of an insulating material (6) produced in a space (7) between the water tank (3) and the casing (4); and/or
b. the mechanical pressure is directly or indirectly exerted on said wall structure (5).

3. Cap element (1) according to any one of claims 1 to 2, **characterized in that**
a. the wall structure (5) is integrated in the second surface (11) of the cap element (1); and/or
b. the wall structure (5) is arranged in a cavity of the cap element (5); and/or
c. the wall structure (5) is attachable to the second surface (11) of the cap element (5).

4. Cap element (1) according to any one of claims 1 to 3, **characterized in that**
a. the wall structure (5) extends parallel to the sides of the casing (4); and/or
b. the wall structure (5) has a surface area of at least 2,500 mm²; and/or
c. the wall structure (5) has a thickness value of at least 15 mm, in particular of 20 mm.

5. Cap element (1) according to any one of claims 1 to 4, **characterized in that** the wall structure (5) is compressible in response to the mechanical pressure.

6. Cap element (1) according to any one of claims 1 to 5, **characterized in that** the first surface (10) of the cap element (1) is made of, or is at least partially coated with, a deformable material.

7. Cap element (1) according to any one of claims 1 to 6, **characterized in that** the cap element comprises a third surface (16), parallel to the second surface (11), said third surface (16) being a supporting surface for at least one mechanical and/or electronic device.

8. Cap element (1) according to any one of claims 1 to 7, **characterized in that**
a. the wall structure (5) is made of expanded foam material, in particular expanded polystyrene, expanded polyethylene, or expanded polypropylene; and/or
b. the cap element (1) is entirely made of expanded foam material, in particular expanded polystyrene, expanded polyethylene, or expanded polypropylene; and/or
c. the wall structure (5) has a, in particular minimum, Young Modulus, in particular a Young Modulus comprised between 0 MPa and 100 MPa, in particular 1 MPa and 100 MPa, in particular between 5 and 20 MPa.

9. Cap element (1) according to any one of claims 1 to 8, **characterized in that**
a. the wall structure (5) protrudes from the first surface (11) in parallel to the first surface (10) of the cap element (1); and/or
b. the wall structure (5) is a one-piece structure or is formed by a plurality of separated structures;
c. the cap element (1) has a circular cross-section and the wall structure (5) has a curved profile;
d. the wall structure (5) is arranged in a geodetically lower part of cap element (1) with respect to the first surface (10); and/or
e. the first surface (10) defines a first external perimeter of the cap element (1) and the wall structure (5) defines a second external perimeter of the cap element (1), wherein the first external perimeter is wider that the second external perimeter.

10. Cap element (1) according to any one of claims 1 to 9, **characterized in that** the wall structure (5) is formed by a plurality of separated structures, in particular
a. at least three separated structures, arranged along a circumferential perimeter, wherein in particular the wall structure (5) is formed by three separated structures arranged at 120° apart from each other or by four separated structures arranged at 90° apart from each other or
b. at least three separated structures, arranged along a circumferential perimeter, wherein in particular the wall structure (5) is formed by at least three separated structures arranged at least 90° apart from each other.

11. Cap element (1) according to any one of claims 1 to 10, **characterized in that** the wall structure (5) comprises at least an inclined surface (14) forming an angle α with a vertical central axis (15) of the cap element (1), wherein in particular α is lower than 45° and more particularly α is lower than 30°.

12. Heating device system (2), in particular a heat pump water heater, comprising:
a casing (4);
a water tank (3) located in the casing (4); and
a cap element (5) according to any one of claims 1 to 11, the cap element (1) being placeable on or in the casing (4) and closing said casing (4) at an upper portion (12) of the tank (3),
wherein the cap element (1) comprises:
a first surface (10) facing at least a side of the casing (4) and abutting against at least a portion of said side of the casing (4) when the cap element (1) is placed on or in the casing (4) and a second surface (11) facing the upper portion (12) of the water tank (3) when the cap element (1) is placed on or in the casing (4); and
at least a wall structure (5) protruding from the remaining cap element (1) and comprising an internal surface (18) that faces an internal central region of the water tank (3), wherein
at least a part of the cap element, in particular the complete cap element is made of expanded foam material, in particular expanded polystyrene, expanded polyethylene, or expanded polypropylene.

13. Heating device system (2) according to claim 12, **characterized in that** the device (2) further comprises an insulating material (6) arranged in a space (7) between the water tank (3) and the casing (4), the insulating material (6) causing a direct or indirect mechanical pressure on the wall structure (5) of the cap element (1).

14. Heating device system (2) according to any one of claims 12 to 13, **characterized in that** the cap element (1) is a support for a heat pump.

15. Use of the cap element (1) according to any one of clams 1 to 11 in a heating device system (2), in particular a heat pump water heater.
